(19) **Europäisches Patentamt**
**European Patent Office**
**Office européen des brevets**

(11) **EP 1 746 475 A1**

(12) **EUROPÄISCHE PATENTANMELDUNG**

(43) Veröffentlichungstag:
**24.01.2007 Patentblatt 2007/04**

(51) Int Cl.:
**G05B 19/418** (2006.01)

(21) Anmeldenummer: **05015604.1**

(22) Anmeldetag: **19.07.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **MTU Aero Engines GmbH**
**80995 München (DE)**

(72) Erfinder: **Wik, Jürgen**
**6600 Locarno (CH)**

(54) **Verfahren zur Generierung von Prozessketten**

(57) Die Erfindung betrifft ein Verfahren zur Generierung von Prozessketten für die Produktherstellung mit folgenden. Schritte: a) Erfassung von allen für das zu fertigende Bauteil zur Verfügung stehenden Daten; b) Untergliedern des Bauteils in unabhängig voneinander fertigbare Bauteilelemente bzw. Prozessblöcke, c) Erfassung von allen möglichen Kerntechnologien für die einzelnen Prozessblöcke, d) Generierung aller möglichen Fertigungsprozessketten durch Kombination aller Kerntechnologien eines Prozessblocks mit den Kerntechnologien der anderen Prozessblöcke; e) Reduzierung aller möglichen Fertigungsprozessketten auf eine Teilmenge möglicher Fertigungsprozessketten unter Heranziehung von Randbedingungen; f) Generierurig detaillierter Fertigungsprozessketten für diese Teilmenge der Fertigungsprozessketten, g) Ermittlung von Daten über sich unter Verwendung der detaillierten Fertigungsprozessketten ergebende Stückkosten für das zu fertigende Bauteil; h) Ermittlung von Daten über das technologischen Risiko und/oder die Schärfe der ermittelten Stückkosten für die detaillierten Fertigungsprozessketten; i) Durchführung von Kapitalwertkalkulationen für die detaillierten Fertigungsprozessketten auf Basis der jeweiligen Stückkosten; j) Auswahl der optimalen Fertigungsprozesskette für das Bauteil zumindest auf Basis der Kapitalwertkalkulationen und der Risiko- und/oder Schärfedaten.

Fig. 1

EP 1 746 475 A1

**Beschreibung**

Die Erfindung betrifft ein Verfahren zur Generierung einer Prozesskette, nämlich einer optimalen Fertigungsprozesskette für ein Bauteil.

Nach dem Stand der Technik wird bei der Produktentwicklung so vorgegangen, dass in einer sogenannten Designphase das konstruktive Design eines Bauteils festgelegt und anschließend in einer Fertigungsplanungsphase eine Fertigungsprozesskette für das fertig konstruierte Bauteil erstellt wird. Die Designphase sowie die Fertigungsplanungsphase sind dabei voneinander getrennte, sowie sequentiell bzw. hintereinander ablaufende Vorgänge. In der Fertigungsplanungsphase wird nach dem Stand der Technik so vorgegangen, dass für die Fertigung eines Bauteils eine Fertigungsprozesskette aus mehreren hintereinander ablaufenden Prozessschritten, nämlich Fertigungsschritten sowie Bearbeitungsschritten, festgelegt wird, wobei für jeden einzelnen Fertigungsschritt sowie Bearbeitungsschritt und demnach Prozessschritt eine Optimierung angestrebt wird. Dabei wird davon ausgegangen, dass eine Aneinanderreihung der für sich optimierten, einzelnen Fertigungsschritte und Bearbeitungsschritte zu einer insgesamt optimalen Fertigungsprozesskette für das Bauteil führt.

Die obige, aus dem Stand der Technik bekannte Vorgehensweise bei der Entwicklung von Produkten verfügt über den Nachteil, dass durch die Aneinanderreihung von für sich isoliert optimierten Fertigungsschritten sowie Bearbeitungsschritten zu einer Fertigungsprozesskette für ein Bauteil keine gesamtheitliche Betrachtung möglich ist. Insofern kann auch nicht sichergestellt werden, dass eine optimale Fertigungsprozesskette für ein zu fertigendes Bauteil gefunden wird. Ein weiterer Nachteil der aus dem Stand der Technik bekannten Vorgehensweise bei der Produktentwicklung besteht darin, dass durch die strikte Trennung von Designphase und Fertigungsplanungsphase konstruktive Designs für ein Bauteil festgelegt werden können, die nicht oder nur mit hohem Kostenaufwand fertigbar sind. Letztendlich werden durch die strikte Trennung von Designphase und Fertigungsplanungsphase Impulse an die Verfahrensentwicklung zu spät gegeben, so dass neue Fertigungsverfahren bzw. Bearbeitungsverfahren, die zur Fertigung des Bauteils erforderlich sind, häufig nicht rechtzeitig zur Verfügung stehen.

Hiervon ausgehend liegt der vorliegenden Erfindung das Problem zu Grunde, ein neuartiges Verfahren zur Generierung einer Prozesskette, nämlich einer optimalen Fertigungsprozesskette für ein Bauteil, zu schaffen.

Dieses Problem wird durch ein Verfahren gemäß Patentanspruch 1 gelöst. Erfindungsgemäß umfasst das Verfahren zur Generierung einer Prozesskette, nämlich einer optimalen Fertigungsprozesskette für ein Bauteil, zumindest die folgenden Schritte: a) Erfassung von allen für das zu fertigende Bauteil zur Verfügung stehenden Daten; b) Untergliedern des zu fertigenden Bauteils in unabhängig voneinander fertigbare Bauteilelemente, wobei auf Basis dieser Untergliederung Prozessblöcke definiert werden, um die Bauteilelemente zu fertigen; c) Erfassung von allen möglichen Kerntechnologien für die einzelnen Prozessblöcke, wobei Kerntechnologien solche Fertigungsverfahren und Bearbeitungsverfahren sind, durch die sich alternative Fertigungsverfahren und Bearbeitungsverfahren voneinander unterscheiden; d) Generierung aller möglichen Fertigungsprozessketten durch Kombination aller Kerntechnologien eines Prozessblocks mit den Kerntechnologien der anderen Prozessblöcke; e) Reduzierung aller möglichen Fertigungsprozessketten auf eine Teilmenge möglicher Fertigungsprozessketten unter Heranziehung von geometrischen und/oder technologischen Randbedingungen; f) Generierung detaillierter Fertigungsprozessketten für diese Teilmenge der Fertigungsprozessketten, wobei für alle Fertigungsprozessketten identische Eingangszustände und Ausgangszustände gelten bzw. festgelegt werden; g) Ermittlung von Daten über sich unter Verwendung der detaillierten Fertigungsprozessketten ergebende Stückkosten für das zu fertigende Bauteil; h) Ermittlung von Daten über das technologischen Risiko und/ oder die Schärfe der ermittelten Stückkosten für die detaillierten Fertigungsprozessketten; i) Durchführung von Kapitalwertkalkulationen für die detaillierten Fertigungsprozessketten auf Basis der jeweiligen Stückkosten; j) Auswahl der optimalen Fertigungsprozesskette für das Bauteil zumindest auf Basis der Kapitalwertkalkulationen und der Risiko- und/ oder Schärfedaten.

Mit dem erfindungsgemäßen Verfahren zur Generierung einer Fertigungsprozesskette für ein zu fertigendes Bauteil wird keine Fertigungsprozesskette generiert, die aus einer Aneinanderreihung von für sich optimierten Fertigungsschritten und Bearbeitungsschritten besteht, sondern es wird vielmehr eine ganzheitlich optimierte Fertigungsprozesskette generiert. Hierdurch wird es möglich, für zu fertigende Bauteile maßgeschneiderte Fertigungsprozessketten zu erstellen. Durch eine Integration des erfindungsgemäßen Verfahrens in die Designphase der Produktentwicklung ist eine Verzahnung bzw. Parallelisierung von Designphase und Fertigungsplanungsphase möglich. Hierdurch ist es möglich, bereits in der Designphase, in der ein Großteil der späteren Fertigungskosten festgelegt wird, die Erfordernisse der Fertigungsplanungsphase zu berücksichtigen und auch unter den Gesichtspunkten der Fertigbarkeit und der Fertigungskosten ein optimales Bauteil bzw. Produkt zu entwickeln. Weiterhin ist es durch die Verzahnung von Designphase und Fertigungsplanungsphase mit dem erfindungsgemäßen Verfahren möglich, Fertigungsprozessketten frühzeitig systematisiert, standardisiert und automatisiert zu generieren und hierbei Lücken im Technologieportfolio für Fertigungsverfahren und Bearbeitungsverfahren frühzeitig zu identifizieren.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

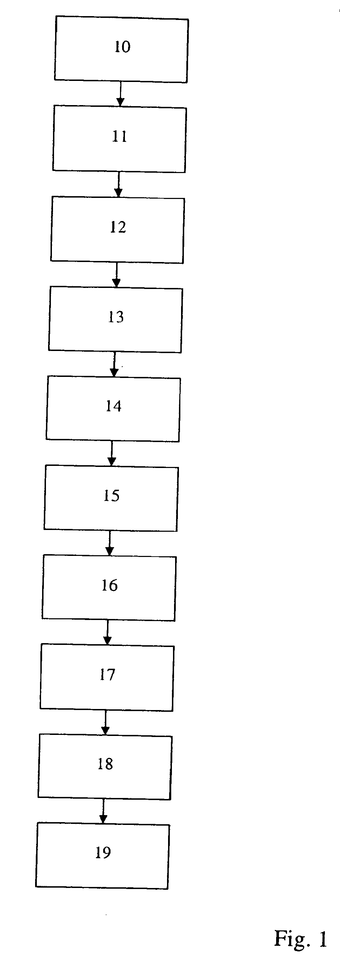

Fig. 1    ein Signalflussdiagramm zur Verdeutlichung des erfindungsgemäßen Verfahren zur Generierung einer Prozesskette, nämlich einer optimalen Fertigungsprozesskette für ein Bauteil.

Nachfolgend wird die Erfindung unter Bezugnahme auf Fig. 1 in größerem Detail beschrieben.

In einem ersten Schritt 10 des erfindungsgemäßen Verfahrens werden alle für das zu fertigende Bauteil zur Verfügung stehende Daten erfasst bzw. gesammelt. Hierbei werden unter anderem Bauteilgeometriedaten für das zu fertigende Bauteil erfasst. Weiterhin werden vorrichtungstechnische Daten und verfahrenstechnische Daten verfügbarer Fertigungsverfahren und Bearbeitungsverfahren erfasst. Die Art der Datenerfassung hängt dabei vom Stadium ab, in welchem sich das zu fertigende Bauteil befindet. Befindet sich das Bauteil zum Beispiel in einer frühen Designphase, so können lediglich grobe Geometriedaten erfasst werden. In einer späteren Designphase können zusätzlich erste Arbeitspläne sowie Bauteilzeichnungen erfasst werden. Im Schritt 10 des erfindungsgemäßen Verfahrens wird demnach die Ist-Situation durch Sammeln aller für das zu fertigende Bauteil zur Verfügung stehender Daten erfasst.

Darauffolgend wird in einem Schritt 11 das zu fertigende Bauteil in unabhängig voneinander fertigbare Bauteilelemente untergliedert, und es werden Prozessblöcke definiert, um diese Bauteilelemente zu fertigen. Durch die Untergliederung komplexer Bauteile in unabhängig voneinander fertigbare Bauteilelemente werden überschaubare und damit handhabbare Teilbereiche bei der Fertigung komplexer Bauteile geschaffen.

Soll als Bauteil ein integral beschaufelter Gasturbinenrotor gefertigt werden, so kann ein Bauteilelement, welches für sich genommen bzw. unabhängig gefertigt werden kann, ein Schaufelblatt eines solchen integral beschaufelten Gasturbinenrotors sein. In Schritt 11 wird demnach in einem Teilschritt das zu fertigende Bauteil in unabhängig voneinander fertigbare Bauteilelemente untergliedert, wobei auf Basis dieser Untergliederung in einem weiteren Teilschritt Prozessblöcke definiert werden, um die Bauteilelemente zu fertigen.

In einem sich an den Schritt 11 anschließenden Schritt 12 des erfindungsgemäßen Verfahrens werden für die in Schritt 11 definierten Prozessblöcke des zu fertigenden Bauteils bzw. der zu fertigenden Bauteilelemente alle möglichen Kerntechnologien erfasst. Bei den Kerntechnologien handelt es sich um solche Fertigungsverfahren und Bearbeitungsverfahren für die einzelnen Prozessblöcke, durch die sich alternative Fertigungsverfahren und Bearbeitungsverfahren signifikant voneinander unterscheiden. Bei der Fertigung von Laufschaufeln eines integral beschaufelten Rotors können für den Prozessblock "Hauptbearbeitung" zum Beispiel konventionelles Umlauffräsen, trochoides Taumelfräsens oder Räumen als mögliche Fertigungsverfahren vorgesehen sein. Ist zum Beispiel zur Durchführung des konventionellen Umlauffräsens, trochoiden Taumelfräsens sowie Räumens immer ein Reinigen sowie Gleitschleifen erforderlich, so handelt es sich beim Reinigen sowie Gleitschleifen nicht um Kerntechnologien. Vielmehr werden dann als Kerntechnologien nur das Umlauffräsen, Taumelfräsen und Räumen als solche erfasst.

Darauffolgend werden in Schritt 13 des erfindungsgemäßen Verfahrens alle möglichen Fertigungsprozessketten für ein zu fertigendes Bauteil dadurch generiert, dass alle Kerntechnologien eines Prozessblocks mit den Kerntechnologien der in Fertigungsrichtung nachfolgenden Prozessblöcke miteinander kombiniert werden. Durch die Kombination aller Kerntechnologien aller in Fertigungsrichtung angeordneten Prozessblöcke ergibt sich eine Vielzahl möglicher Fertigungsprozessketten, wobei Schritt 13 rein kombinatorisch durchgeführt wird. Hierbei bleiben geometrische Grenzen oder auch technologische Grenzen für die Herstellbarkeit des zu fertigenden Bauteils unberücksichtigt. In Schritt 13 des erfindungsgemäßen Verfahrens werden durch die Kombination aller Kerntechnologien aller Prozessblöcke miteinander möglichst viele alternative Fertigungsprozessketten identifiziert.

In einem sich anschließenden Schritt 14 des erfindungsgemäßen Verfahrens wird aus der in Schritt 13 ermittelten Vielzahl aller möglichen Fertigungsprozessketten eine Teilmenge möglicher Fertigungsprozessketten unter Heranziehung geometrischer und/oder technologischer Randbedingungen herausgefiltert. In Schritt 14 werden demnach die in Schritt 13 erzeugten Fertigungsprozessketten auf eine Teilmenge reduziert. Die geometrischen Randbedingungen werden hierbei aus den in Schritt 10 erfassten Bauteilgeometriedaten abgeleitet. Die technologischen Randbedingungen ergeben sich aus den erfassten vorrichtungstechnischen sowie verfahrenstechnischen Daten der zur Verfügung stehenden Fertigungs- bzw. Bearbeitungsverfahren sowie Fertigungs- bzw. Bearbeitungsmaschinen. Bei der Reduzierung der Fertigungsprozessketten spielen demnach geometrische sowie technologische Randbedingungen eine entscheidende Rolle, wobei dabei beurteilt wird, inwieweit mit den möglichen Fertigungsprozessketten Bauteilspezifikationen erreicht werden können. Bei der Reduzierung der Fertigungsprozessketten in Schritt 14 kommen demnach Bauteilspezifikationen bzw. Bauteilgeometriedaten eine entscheidende Bedeutung zu.

In einem sich anschließenden Schritt 15 des erfindungsgemäßen Verfahrens werden dann für die in Schritt 14 ermittelte Teilmenge der Fertigungsprozessketten detaillierte Fertigungsprozessketten generiert.

Die Detaillierung erfolgt dabei mit dem Ziel, dass die noch auf einem relativ groben Niveau vorliegenden Fertigungsprozessketten der identifizierten Teilmenge aller möglichen Fertigungsprozessketten untereinander vergleichbar werden. Hierzu werden in Schritt 15 für alle Fertigungsprozessketten der in Schritt 14 definierten Teilmenge identische Eingangszustände und Ausgangszustände identifiziert. Ausgehend vom Eingangszustand werden alle Fertigungsprozessketten so lange um Fertigungsschritte sowie Bearbeitungsschritte ergänzt, bis mit allen Fertigungsprozessketten der Teilmenge der identische Ausgangszustand erreicht wird. Hauptaugenmerk ist hierbei wiederum auf solche Fertigungsschritte bzw. Bearbeitungsschritte oder Fertigungsverfahren sowie Bearbeitungsverfahren zu legen, die nicht bei allen Fertigungsprozessketten vorkommen.

Der in Schritt 15 vorzunehmende Detaillierungsgrad für die Fertigungsprozessketten der in Schritt 14 identifizierten Teilmenge kann stark voneinander variieren, wobei jedoch eine möglichst große Detaillierung für alle Fertigungsprozessketten angestrebt wird. Dabei ist zu beachten, dass einzelne Prozessschritte bzw. Fertigungsschritte und Bearbeitungsschritte der detaillierten Fertigungsprozessketten nicht beliebig gegeneinander austauschbar sind, da sich einzelne Fertigungsschritte sowie Bearbeitungsschritte einer gesamten Fertigungsprozesskette sehr wohl hinsichtlich ihrer Eingangszustände sowie Ausgangszustände voneinander unterscheiden können.

Im Anschluss an Schritt 15 werden in einem Schritt 16 des erfindungsgemäßen Verfahrens Daten über sich unter Verwendung der detaillierten Fertigungsprozessketten ergebende Stückkosten bei der Fertigung des Bauteils ermittelt. Aufbauend auf der in Schritt 15 vorgenommenen Detaillierung der Prozessketten werden dieselben hinsichtlich der zu erwartenden Stückkosten bewertet. Hierzu werden die für die detaillierten Fertigungsprozessketten benötigten Prozesszeiten je Prozessschritt und damit Fertigungsschritt bzw. Bearbeitungsschritt ermittelt, wobei unter Zugrundelegung von Personalkosten und Maschinenkosten sowie Materialkosten die jeweiligen Stückkosten für die detaillierten Fertigungsprozessketten errechnet werden. Die Prozesszeiten der einzelnen Fertigungsschritte sowie Bearbeitungsschritte der detaillierten Fertigungsprozessketten können entweder geschätzt oder analytisch ermittelt werden.

Aus den Prozesszeiten je Prozessschritt, Maschinenstundensätzen, Personalkosten sowie Materialkosten können auf einfache Art und Weise für jede detaillierte Fertigungsprozesskette zu erwartende Stückkosten errechnet werden.

In einem sich hieran anschließenden Schritt 17 des erfindungsgemäßen Verfahrens werden Daten über das technologische Risiko der detaillierten Fertigungsprozessketten sowie über die Schärfe der ermittelten Stückkosten für die detaillierten Fertigungsprozessketten ermittelt.

Bei der Ermittlung des technologischen Risikos der detaillierten Fertigungsprozessketten wird für jede der detaillierten Fertigungsprozessketten ein technologisches Gesamtrisiko $R_{GESAMT}$ ermittelt, wobei dieses technologische Gesamtrisiko aus den Risikowerten $R_{SCHRITT-I}$ der einzelnen Prozessschritte der detaillierten Fertigungsprozessketten ermittelt wird. Für jedes Fertigungsverfahren bzw. Bearbeitungsverfahren eines Prozessschritts I und damit für jeden Fertigungsschritt sowie Bearbeitungsschritt werden demnach Risikowerte $R_{SCHRITT-I}$ ermittelt, wobei die Risikowerte vom jeweiligen Entwicklungsstadium der Fertigungsverfahren bzw. Bearbeitungsverfahren abhängig sind. Dabei kann folgende Tabelle verwendet werden.

| Technologiereifegrads | Risikowert |
|---|---|
| Serienreife | 0 % |
| Übergangsphase | 3 % |
| Erprobungsphase | 5 % |
| Auslegungsphase | 8 % |
| Konzeptphase | 13 % |
| Definitionsphase | 18 % |
| Vorphase | 20 % |

Handelt es sich demnach zum Beispiel um ein serienreifes Fertigungs- und Bearbeitungsverfahren, so beträgt der Risikowert 0 %. Liegt das Fertigungs- bzw. Bearbeitungsverfahren jedoch erst in der Konzeptphase vor, so beträgt der Risikowert zum Beispiel 13 %. Befindet sich das Fertigungsverfahren bzw. Bearbeitungsverfahren bereits in der Erprobungsphase, so kann diesem ein Risikowert von zum Beispiel 5 % zugeordnet werden.

Zusätzlich zu der Bewertung des Technologiereifegrads bei der Ermittlung der Risikowerte für die Prozessschritte kann des weiteren berücksichtigt werden, ob es sich um betriebsintern verfügbare Verfahren oder um extern zuzukaufende Verfahren handelt. Abhängig hiervon, können die auf Basis des Technologiereifegrads ermittelten Risikowerte mit einem Risikozuschlagswert versehen werden. Dabei kann folgende Tabelle verwendet werden.

| Technologieverfügbarkeit | Risikozuschlagswert |
|---|---|
| Betriebsintern | 0 % |
| Kooperationspartner | 5 % |

(fortgesetzt)

| Technologieverfügbarkeit | Risikozuschlagswert |
|---|---|
| Fremdfirma | 10 % |

Bei betriebsinternen verfügbaren Verfahren beträgt der Risikozuschlagswert 0 %. Handelt es sich um zuzukaufende Fremdtechnologien, so kann zum Beispiel ein Risikozuschlagswert von 10 % auf den auf Basis des Technologiereifegrads ermittelten Risikowert addiert werden. Handelt es sich um Technologien von Kooperationspartnern, so kann ein Risikozuschlagswert von 5 % auf den auf Basis des Technologiereifegrads ermittelten Risikowert zugeschlagen werden.

Nach Festlegung bzw. Ermittlung der Risikowerte $R_{SCHRITT-I}$ aller Prozessschritte I der detaillierten Fertigungsprozessketten als Summe aus Risikowert und Risikozuschlagswert wird dann das technologische Gesamtrisiko $R_{GESAMT}$ einer detaillierten Fertigungsprozesskette unter Verwendung der folgenden Formel errechnet:

$$R_{GESAMT} = (1-((1-R_{SCHRITT-1})*(1-R_{SCHRITT-2})*\ldots*(1-R_{SCHRITT-N}))),$$

wobei $R_{GESAMT}$ das technologische Gesamtrisiko einer detaillierten Fertigungsprozesskette, $R_{SCHRITT-I}$ der Risikowert des Prozessschritts I dieser detaillierten Fertigungsprozesskette und N die Anzahl der Prozessschritte ist.

Wie bereits erwähnt, wird in Schritt 17 weiterhin für jede detaillierte Fertigungsprozesskette die Schärfe der ermittelten Stückkosten ermittelt, die auch als "Level of Confidence" bzw. LOC bezeichnet wird. Hierbei wird für jede detaillierte Fertigungsprozesskette eine Gesamtschärfe $LOC_{GESAMT}$ der für die jeweilige detaillierte Fertigungsprozesskette ermittelten Stückkosten ermittelt.

Die Gesamtschärfe $LOC_{GESAMT}$ setzt sich aus Schärfewerten $LOC_{SCHRITT-I}$ der Daten der einzelnen Prozessschritte I der jeweiligen detaillierten Fertigungsprozesskette zusammen. Zur Ermittlung der Schärfewerten $LOC_{SCHRITT-I}$ der einzelnen Prozessschritte I kann folgende Tabelle verwendet werden.

| Datentyp | Schärfewert/LOC |
|---|---|
| validierte Daten | 100 % |
| kalkulierte Daten, Erfahrung ja | 95 % |
| Schätzwert, Erfahrung ja | 93 % |
| kalkulierte Daten, Erfahrung nein | 90 % |
| Schätzwert, Erfahrung nein | 85 % |

Auf Basis validierter Daten ermittelte Stückkosten wird dann ein Schärfewert von 100 % zugeordnet. Auf Basis von erfahrungsbasierten Schätzwertedaten ermittelte Stückkosten wird ein Schärfewert von zum Beispiel 93 % zugeordnet, wohingegen auf Basis erfahrungsloser Schätzwertedaten ermittelte Stückkosten ein Schärfewert von zum Beispiel 85 % zugeordnet wird.

Aus diesen Schärfewerten der einzelnen Prozessschritte I wird dann der Gesamtschärfewert $LOC_{GESAMT}$ jeder detaillierten Fertigungsprozesskette unter Verwendung der folgenden Formel errechnet:

$$LOC_{GESAMT} = LOC_{SCHRITT-1}*LOC_{SCHRITT-2}*\ldots*LOC_{SCHRITT-N},$$

wobei $LOC_{GESAMT}$ die Gesamtschärfe einer detaillierten Fertigungsprozesskette, $LOC_{SCHRITT-I}$ der Schärfewert des Prozessschritts I dieser detaillierten Fertigungsprozesskette und N die Anzahl der Prozessschritte ist.

Im Anschluss an Schritt 17 werden in einem Schritt 18 des erfindungsgemäßen Verfahrens Kapitalwertkalkulationen für die detaillierten Fertigungsprozessketten durchgeführt. Mit einer derartigen Kapitalwertkalkulation für die detaillierten Fertigungsprozessketten können Aspekte wie unterschiedliche Investitionen, Maschinenbelegungszeiten, Kapazitätsauslastungen sowie die unterschiedliche Anzahl benötigter Betriebsmittel erfasst und berücksichtigt werden. Bei der Kapitalwertkalkulation wird jede detaillierte Fertigungsprozesskette als eigenständige Investition betrachtet, die durch eingehende und ausgehende Zahlungsströme, sogenannte Einzahlungen und Auszahlungen, gekennzeichnet ist.

So wird zum Beispiel der voraussichtliche Umsatz bzw. Verkaufserlös der zu fertigenden Bauteile als Einzahlung behandelt. Notwendige Einmalkosten für Bauteilerprobungen und Stückkosten werden als Auszahlungen behandelt. Einzahlungen und Auszahlungen werden dabei im zeitlichen Ablauf nach Größe, zeitlichem Anfall und Dauer unterschieden, so dass zum Beispiel jährliche Schwankungen infolge sich ändernder Umsätze abgebildet werden können. Bei der Kapitalwertmethode werden demnach zeitliche Faktoren berücksichtigt, da Einzahlungen, die in der Zukunft liegen, weniger wert sind als zeitnahe Einzahlungen, und da Auszahlungen um so belastender sind, je näher der Auszahlungszeitpunkt liegt. Alle Einzahlungen und Auszahlungen werden demnach auf den jeweiligen Zeitpunkt abgezinst, wobei ein auf einen Zeitpunkt abgezinste Einzahlung oder Auszahlung auch als Barwert bezeichnet wird.

Der Kapitalwert einer Fertigungsprozesskette ergibt sich als Differenz zwischen der Summe der Barwerte aller Einzahlungen und der Summe der Barwerte aller Auszahlungen unter Zugrundelegung der folgenden Formel:

$$K = \sum_{t=0}^{n} (E_t - A_t)(1+i)^{-t} \ ,$$

wobei K der Kapitalwert, $E_t$ eine Einzahlung am Ende der Periode t, $A_t$ eine Auszahlung am Ende der Periode t, i der Kalkulationszinsfuss, und n die Nutzungsdauer eines Investitionsobjekts ist.

Die Abzinsung erfolgt mit einem Kalkulationszinsfuss, welcher der gewünschten Mindestverzinsung entspricht. Dabei wird unterstellt, dass sich Einzahlungen zum Kalkulationszinsfuss verzinsen. Ist der Kapitalwert Null, so wird gerade noch diese Mindestverzinsung erzielt, das heißt die Einzahlungsüberschüsse sind ausreichend, um Anfangsauszahlungen zu tilgen und das investierte Kapital zum Kalkulationszinsfuss zu verzinsen. Dann, wenn der Kapitalwert positiv ist, gibt dieser die Zahlungsüberschüsse des Investitionsobjekts an, die nach Abzug der Anschaffungsauszahlung zur Verfügung stehen und verzinst werden können. Ferner zeigt ein positiver Kapitalwert an, dass eine über dem Kalkulationszinsfuss liegende Verzinsung vorliegt. Bei negativem Kapitalwert gilt Gegenteiliges. Nach der Kapitalwertmethode ist eine Investition um so vorteilhafter, je höher der Kapitalwert ist. Grundsätzlich ist also eine Fertigungsprozesskette um so vorteilhafter, desto höher deren Kapitalwert ausfällt.

In Schritt 18 des erfindungsgemäßen Verfahrens wird kein absoluter Kapitalwert für die Fertigungsprozessketten ermittelt, vielmehr werden sogenannte Differenzkapitalwerte zu einer Absprungbasis AB ermittelt, die als Vergleichsbasis dient. Hierdurch erspart man sich eine aufwendige Sammlung von Daten hinsichtlich Umsätze, erzielte Verkaufserlöse, Stückkosten und dergleichen. Werden derartige Differenzkapitalwerte in einem Diagramm aufgetragen, so erhält die Absprungbasis den Wert Null. Dies bedeutet jedoch nicht, dass die Absprungsbasis unwirtschaftlich ist. Ein Differenzkapitalwert einer Fertigungsprozesskette ergibt sich unter Zugrundelegung der folgenden Formel:

$$\Delta K = \sum_{t=0}^{n} ((HK_{AB} - HK)_t + (AS - AS_{AB})_t + (AI_{AB} - AI)_t + (EK_{AB} - EK)_t)(1+i)^{-t} \ ,$$

wobei $\Delta K$ der Differenzkapitalwert, HK Herstellkosten, AS Abschreibungen, AI Anlageninvestments, und EK Einmalkosten sind.

In einem sich an den Schritt 18 anschließenden Schritt 19 des erfindungsgemäßen Verfahrens wird dann die optimale Fertigungsprozesskette für ein zu fertigendes Bauteil ausgewählt, und zwar auf Basis der in Schritt 18 vorgenommenen Kapitalwertkalkulation sowie auf Basis der in Schritt 17 ermittelten Risikodaten der detaillierten Fertigungsprozessketten. Dabei wird vorzugsweise in einem Diagramm der Kapitalwert bzw. Differenzkapitalwert über dem Risikowert aufgetragen, wobei bei vergleichbarem Risikowert die Fertigungsprozesskette ausgewählt wird, die den höchsten Kapitalwert aufweist. Eine Fertigungsprozesskette wird demnach nur dann ausgewählt, wenn keine andere Fertigungsprozesskette mit mindestens gleichem Kapitalwert bei niedrigerem Risiko besteht.

Es sei darauf hingewiesen, dass im Wege der erfindungsgemäßen Generierung einer optimalen Fertigungsprozesskette für ein Bauteil auch Technologien bzw. Kerntechnologien berücksichtigt werden können, die noch nicht in Serienreife vorliegen. Zur Überbrückung des Zeitraums zwischen Produktionsstart und Serienreifeverfügbarkeit der jeweiligen Technologie werden dann im Sinne der Erfindung alternative Produktionsszenarien aufgestellt, die mit serienreifen Technologien arbeiten. Ab Serienreifeverfügbarkeit der jeweiligen Technologie kann dann auf eine andere Fertigungsprozesskette ausgewichen werden.

Hierdurch kann im Wege einer gesamtheitlichen Betrachtung eine optimale Fertigungsprozesskette für ein zu fertigendes Bauteil generiert werden.

**Patentansprüche**

1. Verfahren zur Generierung einer Prozesskette, nämlich einer optimalen Fertigungsprozesskette für ein Bauteil, mit folgenden Schritten:

   a) Erfassung von allen für das zu fertigende Bauteil zur Verfügung stehenden Daten;
   b) Untergliedern des Bauteils in unabhängig voneinander fertigbare Bauteilelemente, wobei auf Basis dieser Untergliederung grobe Prozessblöcke definiert werden, um die Bauteilelemente zu fertigen;
   c) Erfassung von allen möglichen Kerntechnologien für die einzelnen Prozessblöcke, wobei Kerntechnologien solche Fertigungsverfahren und Bearbeitungsverfahren sind, durch die sich alternative Fertigungsverfahren und Bearbeitungsverfahren voneinander unterscheiden;
   d) Generierung aller möglichen Fertigungsprozessketten durch Kombination aller Kerntechnologien eines Prozessblocks mit den Kerntechnologien der anderen Prozessblöcke;
   e) Reduzierung aller möglichen Fertigungsprozessketten auf eine Teilmenge möglicher Fertigungsprozessketten unter Heranziehung von geometrischen und/oder technologischen Randbedingungen;
   f) Generierung detaillierter Fertigungsprozessketten für diese Teilmenge der Fertigungsprozessketten, wobei für alle Fertigungsprozessketten identische Eingangszustände und Ausgangszustände gelten bzw. festgelegt werden;
   g) Ermittlung von Daten über sich unter Verwendung der detaillierten Fertigungsprozessketten ergebende Stückkosten für das zu fertigende Bauteil;
   h) Ermittlung von Daten über das technologischen Risiko und/oder die Schärfe der ermittelten Stückkosten für die detaillierten Fertigungsprozessketten;
   i) Durchführung von Kapitalwertkalkulationen für die detaillierten Fertigungsprozessketten auf Basis der jeweiligen Stückkosten;
   j) Auswahl der optimalen Fertigungsprozesskette für das Bauteil zumindest auf Basis der Kapitalwertkalkulationen und Risiko- und/oder Schärfedaten.

2. Verfahren nach Anspruch 1,
   **dadurch gekennzeichnet,**
   **dass** in Schritt a) Bauteilgeometriedaten des zu fertigenden Bauteils erfasst werden.

3. Verfahren nach Anspruch 1 oder 2,
   **dadurch gekennzeichnet,**
   **dass** in Schritt a) vorrichtungstechnische und/oder verfahrenstechnische Daten für verfügbare Fertigungsverfahren und Bearbeitungsverfahren erfasst werden.

4. Verfahren nach einem oder mehreren der Ansprüche 1 bis 3,
   **dadurch gekennzeichnet,**
   **dass** die geometrischen Randbedingungen für Schritt e) aus den in Schritt a) erfassten Bauteilgeometriedaten abgeleitet werden.

5. Verfahren nach einem oder mehreren der Ansprüche 1 bis 4,
   **dadurch gekennzeichnet,**
   **dass** die technologischen Randbedingungen für Schritt e) aus den in Schritt a) erfassten vorrichtungstechnischen und/oder verfahrenstechnischen Daten abgeleitet werden.

6. Verfahren nach einem oder mehreren der Ansprüche 1 bis 5,
   **dadurch gekennzeichnet,**
   **dass** in Schritt g) aus den für die detaillierten Fertigungsprozessketten sich ergebenden Prozesszeiten und/oder Materialen und/oder Vorrichtungen Stückkosten ermittelt werden.

7. Verfahren nach einem oder mehreren der Ansprüche 1 bis 6,
   **dadurch gekennzeichnet,**
   **dass** in Schritt h) das technologische Gesamtrisiko $R_{GESAMT}$ einer detaillierten Fertigungsprozesskette derart ermittelt wird, dass für alle Fertigungsschritte und Bearbeitungsschritte der vorliegenden Fertigungsprozesskette Risikowerte $R_{SCHRITT-I}$ bestimmt werden, die auf dem Entwicklungsstand und/oder der Verfügbarkeit der jeweiligen Kerntechnologie beruhen.

**8.** Verfahren nach Anspruch 7,
**dadurch gekennzeichnet,**
**dass** aus diesen Risikowerten $R_{SCHRITT-I}$ das technologische Gesamtrisiko $R_{GESAMT}$ der detaillierten Fertigungsprozesskette unter Verwendung der Formel

$$R_{GESAMT} = (1-((1-R_{SCHRITT-1})*(1-R_{SCHRITT-2})*...*(1-R_{SCHRITT-N})))$$

errechnet wird.

**9.** Verfahren nach einem oder mehreren der Ansprüche 1 bis 8,
**dadurch gekennzeichnet,**
**dass** in Schritt h) die Gesamtschärfe $LOC_{GESAMT}$ der ermittelten Stückkosten einer detaillierten Fertigungsprozesskette derart ermittelt werden, dass für alle Fertigungsschritte und Bearbeitungsschritte der vorliegenden Fertigungsprozesskette Schärfewerte $LOC_{SCHRITT-I}$ der entsprechenden Daten bestimmt werden.

**10.** Verfahren nach Anspruch 9,
**dadurch gekennzeichnet,**
**dass** aus diesen Schärfewerten $LOC_{SCHRITT-I}$ die Gesamtschärfe $LOC_{GESAMT}$ der detaillierten Fertigungsprozesskette unter Verwendung der Formel

$$LOC_{GESAMT} = LOC_{SCHRITT-1}*LOC_{SCHRITT-2}*...*LOC_{SCHRITT-N}$$

errechnet wird.

**11.** Verfahren nach einem oder mehreren der Ansprüche 1 bis 10,
**dadurch gekennzeichnet,**
**dass** in Schritt i) die Kapitalwertkalkulation der detaillierten Fertigungsprozessketten als eine Differenzkapitalwertkalkulation durchgeführt wird.

**12.** Verfahren nach einem oder mehreren der Ansprüche 1 bis 11,
**dadurch gekennzeichnet,**
**dass** in Schritt j) als optimale Fertigungsprozesskette diejenige ausgewählt wird, die den höchsten Kapitalwert bei niedrigstem Risiko aufweist.

Fig. 1

**Europäisches Patentamt**

# EUROPÄISCHER RECHERCHENBERICHT

Nummer der Anmeldung

EP 05 01 5604

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2003/093762 A1 (RIETMAN EDWARD A ET AL) 15. Mai 2003 (2003-05-15) | 1,3,6-8 | G05B19/418 |
| A | * Spalte 1, Absatz 3 - Absatz 53; Abbildungen 1a-4 * ----- | 2,4,5, 9-12 | |
| Y | DE 100 29 086 A1 (WEBER, HELGA DR.-ING) 3. Januar 2002 (2002-01-03) | 1,3,6-8 | |
| A | * Absatz [0003] - Absatz [0034] * ----- | 2,4,5, 9-12 | |
| Y | EP 0 992 869 A (ROLLS-ROYCE PLC) 12. April 2000 (2000-04-12) | 1,3,6-8 | |
| A | * Absatz [0024] - Absatz [0048] * ----- | 2,4,5, 9-12 | |
| Y | US 2005/071266 A1 (EDER JEFF SCOTT) 31. März 2005 (2005-03-31) | 1,3,6-8 | |
| A | * Absatz [0054] - Absatz [0086] * ----- | 2,4,5, 9-12 | |
| A | US 5 103 421 A (WARD ET AL) 7. April 1992 (1992-04-07) * das ganze Dokument * ----- | 1-12 | RECHERCHIERTE SACHGEBIETE (IPC) G05B |

Der vorliegende Recherchenbericht wurde für alle Patentansprüche erstellt

| Recherchenort | Abschlußdatum der Recherche | Prüfer |
|---|---|---|
| München | 22. November 2005 | Jonda, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 05 01 5604

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-11-2005

| Im Recherchenbericht angeführtes Patentdokument | Datum der Veröffentlichung | Mitglied(er) der Patentfamilie | Datum der Veröffentlichung |
|---|---|---|---|
| US 2003093762 A1 | 15-05-2003 | KEINE | |
| DE 10029086 A1 | 03-01-2002 | WO 0197093 A2<br>EP 1297458 A2<br>US 2003181997 A1 | 20-12-2001<br>02-04-2003<br>25-09-2003 |
| EP 0992869 A | 12-04-2000 | US 6633788 B1 | 14-10-2003 |
| US 2005071266 A1 | 31-03-2005 | KEINE | |
| US 5103421 A | 07-04-1992 | KEINE | |

Für nähere Einzelheiten zu diesem Anhang : siehe Amtsblatt des Europäischen Patentamts, Nr.12/82